# FASCICULE DE BREVET EUROPEEN

(11) **EP 2 221 434 B1**
(45) Date de publication et mention de la délivrance du brevet: **23.02.2011**
(21) Numéro de dépôt: 10290088.3
(22) Date de dépôt: 22.02.2010
(51) Int. Cl.: E04G 21/02

(54) **Installation de lavage des matériels de chantier et de traitement, suivi d'un recyclage, des eaux utilisées pour un tel lavage**
Waschanlage für Baustellen- und Aufbereitungsmaterial, gefolgt von einem Recycling des Brauchwassers für einen solchen Waschvorgang
Facility for washing plant machinery and for treating the water used for such washing process, followed by recycling same

(30) Priorité: 20.02.2009 FR 0900795
(43) Date de publication de la demande: 25.08.2010
(73) Titulaire: SECATOL, 86280 Saint Benoit (FR)
(72) Inventeur: Gilles, Bertrand, 86170 Cissé (FR); Gilles, Claude, 86240 Iteuil (FR); Gilles, Pierre André, 86000 Poitiers (FR); Gilles, Yves-Noël, 86280 Saint-Benoit (FR)
(74) Mandataire: Degret, Jacques

(56) Documents cités:
- EP-A- 1 464 775
- FR-A- 2 728 004
- FR-A- 2 913 894
- US-A1- 2005 145 624

## Description

### ARRIÈRE-PLAN TECHNOGIQUE DE L'INVENTION

La présente invention est relative à une installation combinée (a) de lavage des bennes et des goulottes de camions toupie et (b) de traitement, suivi d'un recyclage, des eaux de lavage de tels matériels de chantier.

On sait qu'il est nécessaire de nettoyer régulièrement les différents matériels qui permettent le transport du béton, notamment les camions toupie qui amènent le béton sur les chantiers et les bennes qui, sur les chantiers à proprement parler, assurent le déversement du béton aux endroits et dans les volumes voulus, et ce afin dans ces deux cas de garantir la durée de vie la plus longue possible à de tels matériels.

On sait aussi qu'au contact du béton les eaux utilisées pour le lavage des matériels précités, chargées en laitance, donc souillées, deviennent fortement basiques, leur PH atteignant le plus souvent des valeurs de l'ordre de 12, voire supérieures à 12.

Or, les réglementations récentes -Code de l'environnement, Règlement Sanitaire Départemental- visant à réduire la pollution de l'environnement, et plus particulièrement celle de la nappe phréatique de l'environnement des chantiers, interdisent de nettoyer sur les chantiers les matériels précités en déversant les eaux de lavage souillées sur le sol.

En outre, en répandant de telles eaux de lavage à même le sol d'un chantier, non seulement les responsables de ce chantier se placent en non-conformité avec les réglementations, puisqu'ils polluent les eaux naturelles, les cours d'eau et les nappes phréatiques, mais ils consomment et gaspillent des quantités énormes d'eau. On estime en effet de 100 à 200 m³ les besoins en eau nécessaires pour nettoyer les goulottes de camions toupie et les bennes utilisés sur un chantier de moyenne importance.

Pour respecter les exigences imposées par les réglementations, et pour simultanément réaliser autant que cela est possible des économies dans la consommation d'eau nécessaire au lavage des bennes et des camions toupie, il conviendrait donc d'installer sur chaque chantier une unité de retraitement des eaux usées (du genre centrale à béton de type ICPE ou station d'épuration) qui puisse assurer la décantation, la neutralisation et le traitement de telles eaux, voire le recyclage des déchets.

Les seules unités actuellement capables de tels retraitements sont des unités très volumineuses, de très grande capacité, fixes, qui nécessitent donc des travaux de terrassement. De telles unités ne sont à l'évidence pas du tout adaptées aux types de chantiers les plus courants.

Toutefois, si, à l'extrême rigueur, il est possible d'envisager la construction d'une telle unité de retraitement sur un chantier, encore faut-il que ce dernier soit de très longue durée et qu'il occupe un site dont la superficie est très étendue.

Rares sont cependant les chantiers qui répondent à ces deux critères. Et ceci est d'autant plus vrai que les chantiers sont pour la plupart urbains, qu'ils sont donc généralement prévus pour des temps courts et surtout qu'il leur est impossible, du fait d'un manque de place, d'accueillir ce genre d'unités de retraitement.

Par ailleurs, d'un point de vue économique, il n'est pas envisageable que les bennes et les camions toupie soient, après utilisation, transportées jusqu'à une unité équipée spécifiquement pour le retraitement des eaux de lavage. Les temps de transport et de lavage de ces matériels retarderaient par trop l'avancement du chantier, d'où des surcoûts dus non seulement à de telles interruptions dans l'utilisation des matériels, mais dus surtout aux retards apportés dans l'achèvement des travaux.

Au surplus, d'un point de vue technique, le temps court de séchage des résidus du béton ne permettrait pas de transporter les matériels à laver depuis les chantiers jusqu'à une unité équipée pour le retraitement des eaux de lavage.

Les installations de lavage des bennes et des camions toupie actuellement présentes sur les chantiers se réduisent donc à de simples bacs de décantation dans lesquels les bennes sont posées ou au-dessus desquels les bennes sont suspendues afin que, lors du lavage de ces matériels, ils reçoivent les eaux usées, chargées en laitance. De tels bacs évitent donc que les eaux ainsi souillées ne soient répandues sur le sol, et polluent par la suite les nappes phréatiques, mais ils n'assurent aucun traitement des eaux souillées autre qu'une décantation grossière. Cela règle le problème de récupération des eaux lors du lavage, mais ne règle pas le problème de retraitement de ces eaux.

Ces bacs sont généralement associés à une passerelle équipée d'une et le plus souvent de deux échelles d'accès pour le compagnon préposé au lavage, d'autant de portillons qu'il existe d'échelles, et d'une rambarde disposée sur tout le reste de la périphérie de la passerelle et dont le rôle est de protéger le compagnon contre les risques de chute.

Sur chantier, la passerelle est positionnée le long de l'un quelconque des côtés du bac et, le plus souvent, elle est accrochée à celui-ci afin de garantir une parfaite stabilité.

Quant au lavage d'un camion toupie, le camion étant bien sûr alors orienté de telle sorte que la toupie surplombe le bac, il est effectué par le compagnon juché sur la passerelle soit à l'aide d'un pistolet de lavage sous pression alimenté en eau par une pompe qui prend l'eau en surface du bac, c'est-à-dire l'eau la moins polluée possible, le lavage se faisant ainsi en circuit fermé, soit à l'aide d'un tuyau d'aspersion spécifique au camion, qui projette de l'eau propre provenant d'un réservoir également associé au camion, l'eau alimentée ainsi par le camion s'écoulant après lavage dans le bac et faisant monter d'autant le niveau de l'eau dans le bac. Les camions toupie ne sont en effet jamais équipés d'un dispositif de récupération des eaux polluées, et encore moins d'un dispositif de traitement de telles eaux.

Si ces bacs sont équipés d'une pompe qui récupère l'eau de surface et la renvoie pour être utilisée pour d'autres lavages, tandis que les déchets et particules en suspension tombent, par sédimentation, au fond des bacs, il convient néanmoins d'acheminer fréquemment les eaux souillées vers une centrale à béton dès lors qu'elles ne font l'objet d'aucun traitement sur chantier et qu'elles sont en conséquence trop rapidement chargées en laitance pour assurer un lavage correct des matériels de chantier.

La société déposante de la présente demande de brevet a conçu une installation de lavage des matériels de chantier (bennes et camions toupie) constituant une avancée notable comparée aux simples bacs. Cette installation, décrite dans le brevet européen n° 1.464.775 publié le 6 octobre 2004, consiste en une passerelle du genre évoqué précédemment, ladite passerelle ayant pour particularité de surplomber une structure métallique qui est disposée devant elle et qui forme en son centre un volume libre agencé pour recevoir et y maintenir la benne à nettoyer, et ce quel que soit le type de benne concerné.

La benne repose en position inclinée dans cette structure en forme de berceau de telle manière que son ouverture supérieure par laquelle est introduit le béton soit tournée vers la passerelle, disposition qui à l'évidence facilite le lavage de la benne par le compagnon. La structure en forme de berceau surplombe elle-même un bac de rétention et de décantation des eaux de lavage afin d'éviter que ces dernières, souillées, ne se répandent sur le sol du chantier.

La société déposante de la présente demande de brevet a par la suite perfectionné une telle installation en lui adjoignant une première unité de traitement et de recyclage des eaux de lavage remplissant son bac de rétention et de décantation, ceci tant pour améliorer la qualité du lavage des matériels de chantier que pour éviter de trop fréquentes opérations de vidange du bac et d'acheminement des eaux souillées vers une centrale à béton dont la mission sera de retraiter de telles eaux souillées.

L'invention ainsi améliorée comprend une armoire technique équipée d'un coffret d'alimentation électrique, d'une pompe de lavage équipée d'un pistolet de lavage sous pression, d'une pompe de relevage, pour le pompage des eaux souillées dans le bac de rétention et de décantation, reliée à un tuyau d'aspiration, et une unité de traitement des eaux de lavage disposée entre la pompe de relevage et le pistolet de lavage.

Cette dernière installation présente toutefois l'inconvénient d'être très encombrante, dans la mesure où l'unité de traitement, elle-même d'un volume important, est disposée au voisinage de la passerelle, du côté opposé à celui de la structure en forme de berceau qui reçoit la benne à nettoyer. Or, l'on sait que, sur les chantiers, notamment les chantiers urbains, le manque de place libre disponible au sol est criant. De plus, il existe un risque important que l'unité de traitement, qui est fragile, soit heurtée par des objets ou des véhicules lourds, des bennes mal manoeuvrées par le grutier ou des camions par exemple, lors de leurs déplacements sur le chantier.

### DESCRIPTION GÉNÉRALE DE L'INVENTION

La présente invention se propose de pallier l'ensemble de ces inconvénients et, à cette fin, elle a pour objet une installation du dernier type précité qui est remarquable en ce qu'elle comprend en outre un deuxième bac de décantation disposé sous la passerelle et un bac d'eau propre retraitée disposé sous le deuxième bac de décantation, l'armoire technique étant pour sa part placée également sous la passerelle, à côté du deuxième bac de décantation et du bac d'eau propre.

Ainsi, l'ensemble composé du deuxième bac de décantation, du bac d'eau propre et de l'armoire technique, qui est d'une très grande compacité, est parfaitement protégé à l'égard du risque de chocs puisqu'il est disposé sous la passerelle et ne déborde du piètement de celle-ci ni sur les côtés latéraux, ni sur le côté arrière, opposé à celui qui reçoit la structure en forme de berceau.

De préférence, le deuxième bac de décantation, le bac d'eau propre et l'armoire technique débordent en outre la passerelle vers l'avant et s'encastrent pour partie sous la structure agencée pour recevoir et maintenir la benne à nettoyer.

Cette variante de construction permet ainsi d'exploiter tout le volume libre existant sous la passerelle et sous la structure en forme de berceau, tout en conservant le même caractère de compacité à l'ensemble "deuxième bac de décantation + bac d'eau propre + armoire technique" et en conservant la même garantie de protection contre les chocs. En outre, en exploitant aussi le volume libre disponible sous la structure en forme de berceau, il est évident qu'il devient possible de prévoir l'emploi d'un deuxième bac de décantation et d'un bac d'eau propre de capacités éventuellement plus importantes.

Dans une variante idéale de construction, on prévoit que la hauteur de l'armoire technique est sensiblement égale à la hauteur du bac d'eau propre augmentée de la hauteur du deuxième bac de décantation.

L'installation selon l'invention est également remarquable en ce que son unité de traitement permet un traitement du pH avant chaque transvasement d'eau du deuxième bac de décantation dans le bac d'eau propre afin de ramener la valeur du pH de l'eau dans la plage admissible allant de 6,5 à 8,5.

Afin d'améliorer la qualité de l'eau traitée par l'installation conforme à l'invention, que cette eau soit destinée à être rejetée aux égouts ou qu'elle soit destinée au lavage futur d'autres matériels de chantier, il est proposé de substituer au traitement antérieur, effectué avec du produit ordinaire du type "pH moins pour piscines", un traitement d'une efficacité notablement supérieure. Pour cela, l'unité de traitement comprend des moyens d'injection de gaz CO₂ dans les eaux de lavage contenues dans le deuxième bac de décantation pour traiter le pH.

Pour la mise en oeuvre de ce traitement amélioré, l'installation comprend une bouteille de gaz CO₂ et un détendeur fixé sur ladite bouteille et relié par un tuyau souple à un diffuseur de CO₂ disposé dans le fond du deuxième bac de décantation, de préférence au centre de ce bac. Dans une construction préférentielle, l'installation comprend également un porte-bouteille apte à recevoir et à fixer la bouteille de gaz CO₂ à l'arrière du deuxième bac de décantation et du bac d'eau propre.

Avantageusement, le traitement amélioré par injection de gaz CO₂ est réalisé de manière semi-automatique, par exemple en réglant le détendeur à un débit d'environ 50 litres par minute pour des cycles de chacun environ 3 minutes.

Selon une autre variante de réalisation, le premier bac de décantation de l'installation selon l'invention est doté d'un platelage amovible permettant au compagnon d'accéder à toutes les parties à laver de la benne tout en sécurisant la zone de lavage.

Selon encore une autre variante de réalisation, le premier bac de décantation de l'installation selon l'invention est prolongé vers l'avant d'une goulotte apte à recevoir et à supporter un éventuel tuyau d'écoulement du béton disposé sous le corps de la benne en cours de nettoyage, cette goulotte étant sensiblement inclinée pour permettre l'écoulement et la récupération des eaux de lavage de l'intérieur de la benne dans le bac de rétention, tout en maintenant au sec le tuyau lors des phases de stockage de la benne sur l'installation afin de limiter sa dégradation.

De préférence, le deuxième bac de décantation est équipé : d'une tôle de séparation disposée verticalement, permettant de séparer les huiles éventuelles des eaux à traiter, d'un dispositif du type vanne manuelle, electro-vanne par exemple, pour le transvasement des eaux dudit deuxième bac de décantation dans le bac d'eau propre, d'un dispositif du type vanne manuelle, electro-vanne, bouchon par exemple, pour la vidange du deuxième bac de décantation, et éventuellement d'une trappe de visite, pour le nettoyage dudit deuxième bac de décantation, laquelle trappe de visite est située sur l'une des faces libres accessibles de ce dernier.

Pour sa part, le bac d'eau propre est avantageusement réalisé sous la forme d'une enceinte protégée de toute projection, ledit bac comprenant en outre : une prise d'eau, un filtre disposé en amont d'une pompe équipée d'un tuyau conduisant au pistolet de lavage sous pression, d'un dispositif du type vanne manuelle, electro-vanne, bouchon par exemple, pour la vidange du bac d'eau propre, et, éventuellement, un niveau d'eau et une trappe de visite, pour le nettoyage dudit bac d'eau propre, située sur l'une des faces libres accessibles de ce dernier.

Quant à l'armoire technique, elle peut avantageusement comprendre : la pompe de relevage pompant les eaux souillées dans le premier bac de décantation, un tuyau d'aspiration de telles eaux souillées, éventuellement une crépine, éventuellement un flotteur permettant de couper l'alimentation électrique de la pompe dans le cas où le niveau de l'eau dans le premier bac de décantation est trop bas, un tuyau de refoulement et éventuellement une minuterie pour limiter dans le temps l'utilisation des pompes afin d'éviter toute détérioration de celles-ci.

Dans une autre forme de réalisation préférée, l'armoire technique peut comprendre également un surpresseur équipé d'une lance de nettoyage dotée d'un tuyau de lavage, d'un pistolet de lavage et éventuellement d'un flotteur permettant de couper l'alimentation électrique de la pompe dans le cas où le niveau de l'eau dans le bac d'eau propre est trop bas. En variante, ou complémentairement, l'armoire technique peut également comprendre un dispositif de protection de l'ensemble des composants de l'installation en cas de températures extérieures négatives.

Les spécifications détaillées de l'invention sont données dans la description qui suit en liaison avec les dessins ci-joints. Il est à noter que ces dessins n'ont d'autre but que celui d'illustrer le texte de la description et qu'ils ne constituent donc en aucune sorte une limitation de la portée de la présente invention.

### BRÈVE DESCRIPTION DES DESSINS

La Figure 1 est une vue en perspective de l'installation selon l'invention.
La Figure 2 est une vue éclatée de l'installation de la Figure 1.
La Figure 3 est une vue par le côté gauche de l'installation de la Figure 1, étant ici précisé que l'avant de ladite installation est constitué par la structure qui est surplombée par la passerelle.
La Figure 4 est une vue de dessus de l'installation de la Figure 1.
La Figure 5 est une vue de l'installation de la Figure 1 prise par son avant.
La Figure 6 représente schématiquement l'installation selon l'invention vue en perspective, et dans la structure en forme de berceau de laquelle il a été placé une benne en cours de lavage.
La Figure 7 représente schématiquement l'installation selon l'invention vue par le côté gauche, et dans la structure en forme de berceau de laquelle repose une benne en cours de lavage.
La Figure 8 est une vue en perspective d'un mode de réalisation préféré du diffuseur disposé dans le fond du deuxième bac de décantation et dont le rôle est d'injecter du gaz CO₂ pour abaisser jusqu'à une valeur acceptable le pH des eaux de lavage contenues dans ledit deuxième bac de décantation.

### DESCRIPTION D'UNE FORME D'ÉXÉCUTION PRÉFÉRÉE DE L'INVENTION

Dans toute la description qui va suivre, la structure repérée par 1 dans son ensemble, qui est disposée devant la passerelle 2 et qui forme un volume libre agencé pour recevoir en son centre et y maintenir la benne 6 à nettoyer, est accrochée sur au moins deux des trois éléments constitués par l'armoire technique 3, le deuxième bac de décantation 4 et le bac d'eau propre 5. Pour exemple, cet accrochage est réalisé au moyen de boulonnages tels que 30 et il est de préférence assuré sur l'armoire technique 3 et sur le deuxième bac de décantation 4.

Il est clair toutefois que ce type d'attache peut être différent sans que l'invention s'en trouve modifiée, et pour exemple la structure 1 peut être directement fixée sur la passerelle 2 comme cela est décrit en détail dans le brevet européen n° 1.464.775.

Identiquement à ce qui a été décrit dans ce brevet européen n° 1.464.775, la passerelle 2 est équipée d'au moins une échelle 7, permettant au compagnon préposé au lavage d'accéder à une plateforme 8, d'autant de portillons 9 qu'il existe d'échelles, et de rambardes 10 disposées sur tout le reste de la périphérie de la passerelle et dont le rôle est de protéger le compagnon contre les risques de chute.

Toujours identiquement à ce qui a été décrit dans le document précité, la passerelle 2 surplombe une structure métallique 1 qui est disposée devant elle et qui forme en son centre un volume libre 11 délimité et agencé par construction pour recevoir et y maintenir la benne 6 à nettoyer, de préférence dans une position où ladite benne est en position inclinée afin que son ouverture 12 par laquelle est introduit le béton soit tournée vers la passerelle 2.

Le volume libre 11 de la structure 1 est délimité par différents moyens de la benne qui sont séparés les uns des autres, à savoir des moyens 13 disposés en partie haute de la structure, qui supportent et retiennent la benne, et des moyens 14 disposés en partie basse de la structure et qui, également, supportent, voire retiennent, la benne.

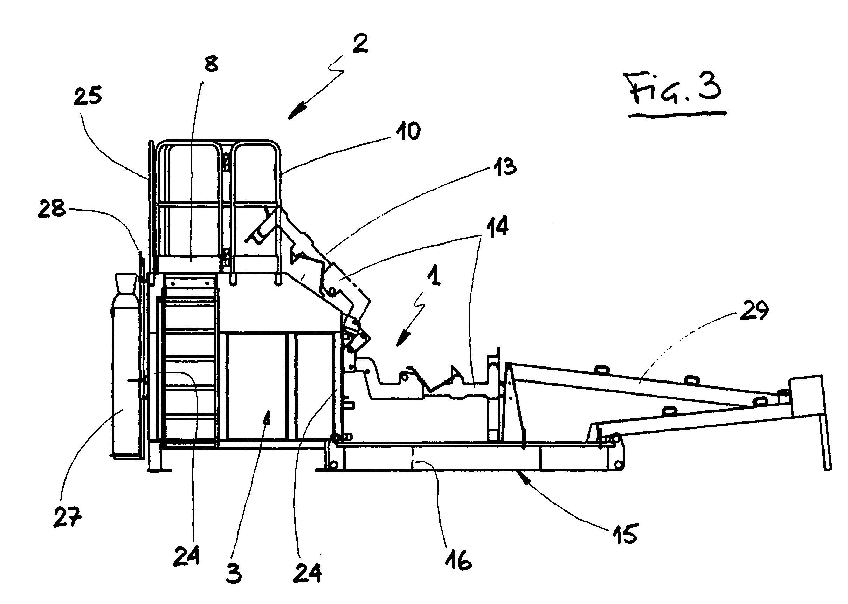

Avantageusement, la structure 1, qui forme ainsi un berceau dans lequel la benne à nettoyer va pouvoir être logée, est prévue pour s'articuler relativement à la passerelle 2. Elle peut occuper soit une position de travail dans laquelle ses moyens de support et de retenue inférieurs reposent sur le sol, soit une position de rangement, ou de transport, représentée en pointillés à la Figure 3, dans laquelle la structure 1 est relevée verticalement et se positionne alors au voisinage de la passerelle 2.

La structure 1 en forme de berceau surplombe un bac 15 de rétention et de décantation des eaux de lavage, ce bac 15 étant disposé au sol, à la verticale de la structure. De préférence, le bac 15 est équipé d'un filtre 16 à très grosses mailles, ou d'une tôle ajourée 16, ce filtre ou cette tôle 16 étant disposé transversalement à l'intérieur du bac. La fonction de ce bac est de procéder à une première séparation des résidus de béton éliminés de la benne par les eaux de lavage, les eaux les plus chargées, qui s'écoulent depuis la goulotte 17 de la benne, se déversant dans la partie avant du bac et les eaux les moins chargées, qui s'écoulent depuis le corps de la benne, se déversant dans la partie arrière du bac. C'est bien évidemment l'eau prise en surface en partie arrière du bac qui est réutilisée pour les futurs lavages, l'essentiel des résidus de béton restant bloqués en avant du filtre 16 pendant que le liquide passe à travers les mailles du filtre au fur et à mesure du pompage des eaux les moins chargées en partie arrière du bac 15, le liquide qui traverse le filtre ne pouvant ainsi qu'être chargé en particules relativement fines.

En toute hypothèse, entre les opérations de pompage, il se produit une décantation des eaux souillées, tant dans la partie arrière que dans la partie avant du bac de rétention 15, les particules fines en suspension en partie arrière du bac et les particules lourdes en suspension en partie avant du bac se déposant par sédimentation au fond de celui-ci et pouvant dès lors en être retirées, les unes et les autres, à l'aide par exemple d'outils du genre raclettes, aussi fréquemment que cela sera nécessaire.

A cette fin, le bac 15 pourra être avantageusement doté d'un platelage 15', de préférence amovible et déplaçable d'avant en arrière, sur lequel le compagnon se tenant debout sera à même de nettoyer le fond du bac. Ce platelage 15' permettra aussi au compagnon d'accéder plus facilement, en zones basse et avant, à toutes les parties à laver de la benne, tout en sécurisant la zone de lavage.

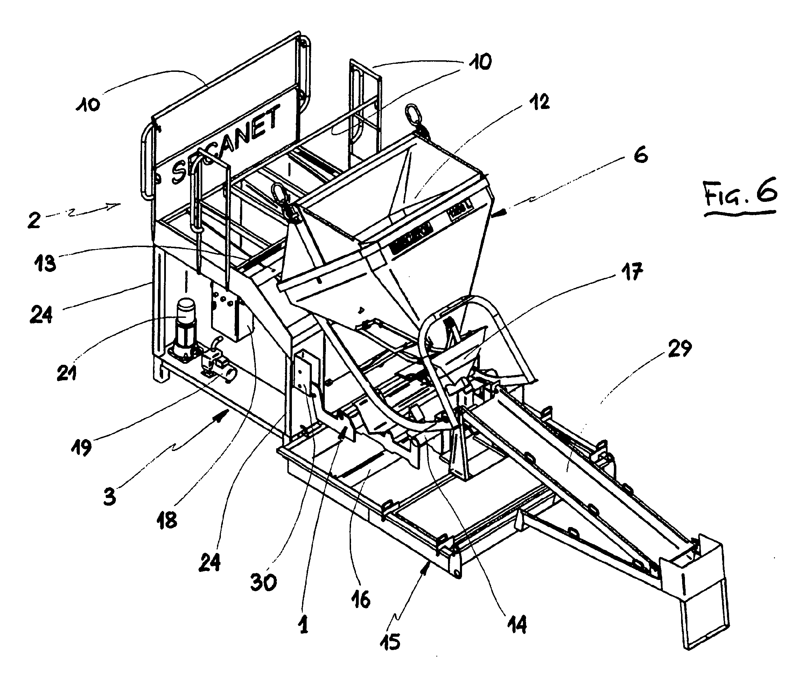

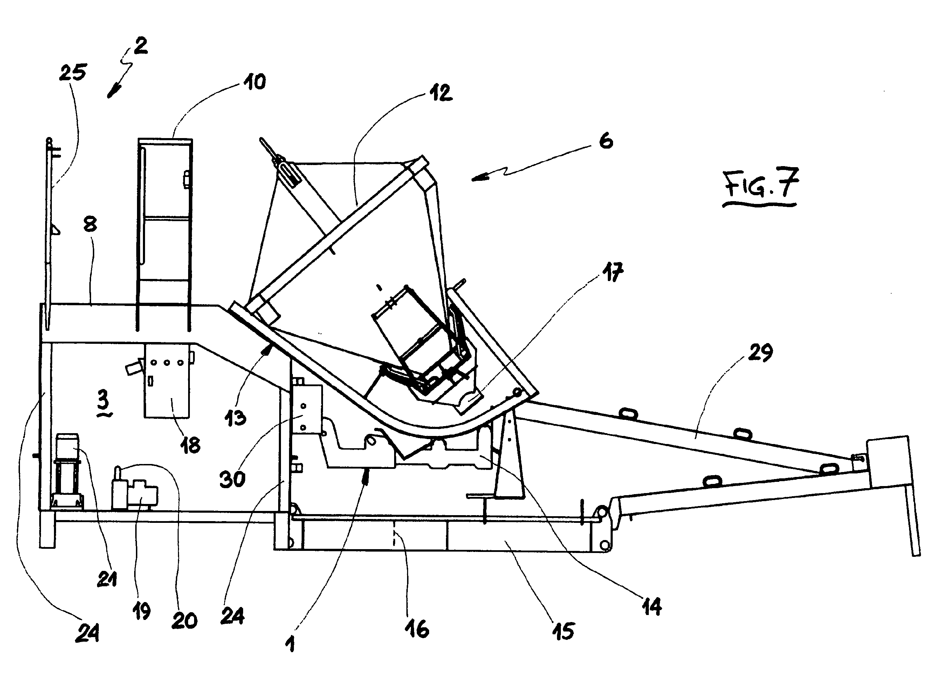

L'armoire technique 3 est équipée d'un coffret d'alimentation électrique 18, d'une pompe de relevage 19, pour le pompage des eaux peu souillées en surface de la partie arrière du bac 15, pompe qui est reliée à un tuyau d'aspiration schématisé par sa prise 20, et d'une pompe équipée d'un pistolet de lavage sous pression des matériels de chantier schématisé par son support 21, ainsi qu'il est particulièrement visible aux Figures 6 et 7, les matériels de chantier à laver étant soit une benne, soit une goulotte de camion toupie dont l'arrière est alors placé au-dessus de la partie avant du bac 15.

Entre la pompe de relevage 19 et le support 21 du pistolet de lavage, il est prévu une unité de traitement des eaux de lavage souillées, cette unité de traitement se composant essentiellement d'un deuxième bac de décantation 4 et d'un bac d'eau propre retraitée 5.

Conformément à l'invention, dans un souci de compacité de cet ensemble, le deuxième bac 4 repose sur le bac d'eau propre 5, ces deux bacs sont immédiatement adjacents à l'armoire technique 3, et l'ensemble ainsi constitué par les trois éléments 3, 4 et 5 précités est placé sous la passerelle 2.

Dans une première variante de construction, l'ensemble est placé de sorte à ne pas déborder le piétement de la passerelle, tant sur les côtés latéraux 22 que sur le côté arrière 23 opposé à celui qui fait face à la structure 1.

Dans une seconde variante de construction, illustrée sur les dessins d'accompagnement, les arêtes gauches de l'armoire technique 3 et les arêtes droites des bacs 4 et 5 sont renforcées par des profilés ou des cornières métalliques tels que 24, qui constituent des prolongements des poteaux d'angle 25 des rambardes 10.

Dans ces deux variantes, l'ensemble constitué des trois éléments 3, 4 et 5 n'émerge pas de la passerelle 2 et est protégé des chocs que pourraient occasionner des véhicules lors de leurs manoeuvres.

Afin de pouvoir disposer de bacs 4 et 5 de capacités plus importantes, on prévoit que l'ensemble précité déborde la passerelle 2 vers l'avant et s'encastre pour partie sous la structure 1, sans toutefois gêner le passage d'une benne à nettoyer lorsque le grutier vient placer cette dernière dans le volume libre 11 jusqu'à ce qu'elle repose sur les moyens de maintien 13 et 14. Par cette construction, l'armoire technique, puisqu'elle sera alors plus longue, pourra être réduite en largeur, ce qui augmentera d'autant plus la capacité de chacun des bacs 4 et 5.

Avantageusement, la hauteur de l'armoire technique 3 sera sensiblement égale à la hauteur du bac inférieur d'eau propre 5 augmentée de la hauteur du bac supérieur de décantation 4 afin, le cas échéant, de constituer un support supplémentaire pour la plateforme 8. L'armoire technique 3 et le bac supérieur 4 auront, par construction, des faces avant, respectivement 3' et 4', inclinées vers le sol d'arrière en avant, et ce toujours dans un souci de gain de place puisqu'alors ces deux éléments pourront venir s'encastrer sous les moyens de maintien supérieurs 13.

Le bac d'eau propre 5 doit être une enceinte protégée de toute projection. C'est la raison pour laquelle il est hautement préférable de le placer sous le deuxième bac de décantation 4, ce dernier le protégeant constamment naturellement. En outre, cette construction permettra à l'eau traitée dans le bac 4 de s'écouler par simple gravité dans le bac 5, alors que dans le cas inverse il faudrait faire appel à une pompe supplémentaire.

Le bac d'eau propre 5 comprend en outre : une prise d'eau, qui sera raccordée par un tuyau au support 21, un filtre disposé en amont de ce tuyau, un dispositif du type vanne manuelle, électro-vanne ou bouchon par exemple, pour la vidange dudit bac 5 et, avantageusement, un niveau d'eau et une trappe de visite pour permettre son nettoyage, ladite trappe étant située sur l'une des trois faces libres accessibles dudit bac 5, c'est-à-dire sur le côté droit 22 ou sur le côté arrière 23, ou mieux encore sur le côté avant 23' puisqu'alors les souillures mal dirigées au cours d'un tel nettoyage tomberont automatiquement dans le bac de rétention 15 au lieu de se répandre sur le sol.

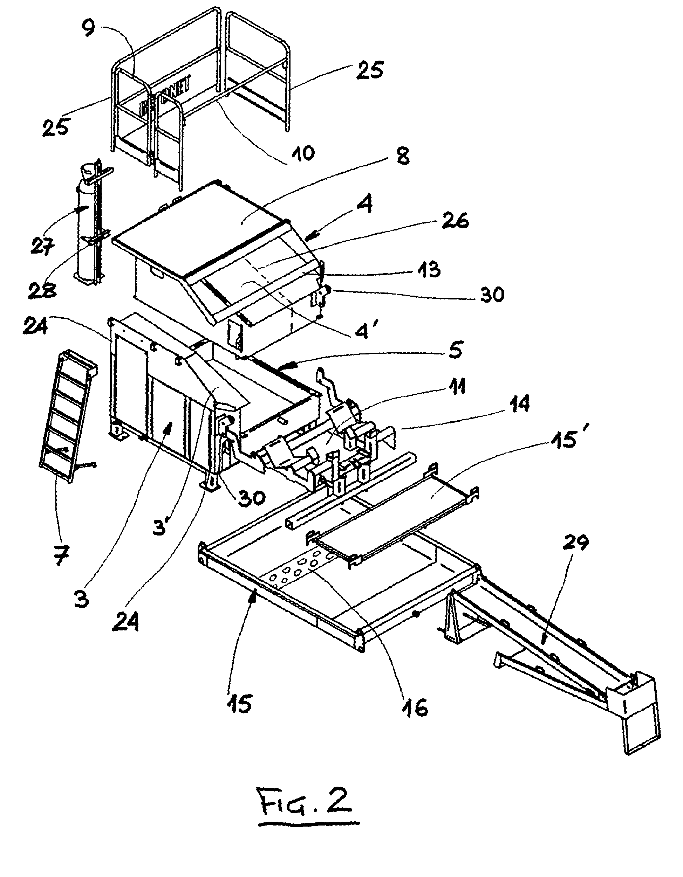

Le deuxième bac de décantation 4 est pour sa part équipé d'une tôle de séparation 26, représentée en pointillés à la Figure 2, laquelle tôle sera disposée verticalement, de préférence parallèle à la direction générale de l'installation, afin que, depuis l'avant de cette dernière, le compagnon puisse plus aisément accéder à chacun des deux compartiments qu'elle délimite dans le bac 4, ou du moins ait une parfaite visibilité de ces deux compartiments. Cette tôle 26 a pour fonction de séparer les éventuelles huiles de décoffrage des eaux de lavage souillées à traiter.

Le deuxième bac de décantation 4 comprend en outre un dispositif de type vanne manuelle ou électro-vanne par exemple, pour le transvasement des eaux traitées dans ledit bac 4. Ce dernier sera également éventuellement doté d'une trappe de visite pour permettre son nettoyage, ladite trappe étant située sur le côté droit 22 ou sur le côté arrière 23, ou mieux encore sur le côté avant 23', c'est-à-dire sur l'une de ses trois faces libres accessibles.

L'installation selon l'invention permet ainsi un recyclage complet des eaux de lavage. Ces dernières sont récupérées dans le premier bac de rétention 15, où elles sont soumises à une première décantation. Elles sont ensuite transférées, pour celles qui sont les moins souillées, dans le deuxième bac de décantation 4 où elles sont alors soumises à une deuxième décantation, à une récupération par séparation des éventuels résidus d'huiles de décoffrage et à un traitement de leur pH. Les eaux ainsi retraitées sont ensuite transférées dans le bac d'eau propre 5, où elles sont stockées afin de pouvoir être utilisés pour un lavage futur, sauf à être rejetées dans les égouts en fin de chantier, lorsque tous les matériels ont été nettoyés pour une dernière fois.

Dans l'une et l'autre de ces deux hypothèses, l'installation selon l'invention assure un retraitement tel que la valeur du pH de l'eau traitée dans le deuxième bac de décantation 4 est située dans la plage admissible de 6,5 à 8,5 et conforme quoi qu'il en soit à la valeur imposée par les autorités locales compétentes. Ainsi, lorsqu'en fin de chantier les eaux traitées sont mises à l'égout, il est certain que cela se fera sans risque de pollution.

A cette fin, avant chaque transvasement d'eau du deuxième bac de décantation 4 dans le bac d'eau propre 5, l'unité de traitement assure un traitement du pH. Cette opération s'effectue sans apport d'acide, à la différence donc des techniques antérieures.

Conformément à l'invention, pour traiter le pH, l'unité de traitement de la présente installation comprend des moyens d'injection de gaz CO₂ dans les eaux de lavage contenues dans le deuxième bac de décantation 4. Ces moyens d'injection se composent d'une bouteille 27 de gaz CO₂ et d'un détendeur fixé sur ladite bouteille et relié par un tuyau souple à un diffuseur de CO₂ disposé dans le fond du deuxième bac de décantation 4, de préférence au milieu de ce bac, centré par rapport à la tôle séparatrice 26. La bouteille 27 de gaz CO₂ est supportée par un porte-bouteille 28 lui-même fixé à l'arrière des bacs 4 et 5.

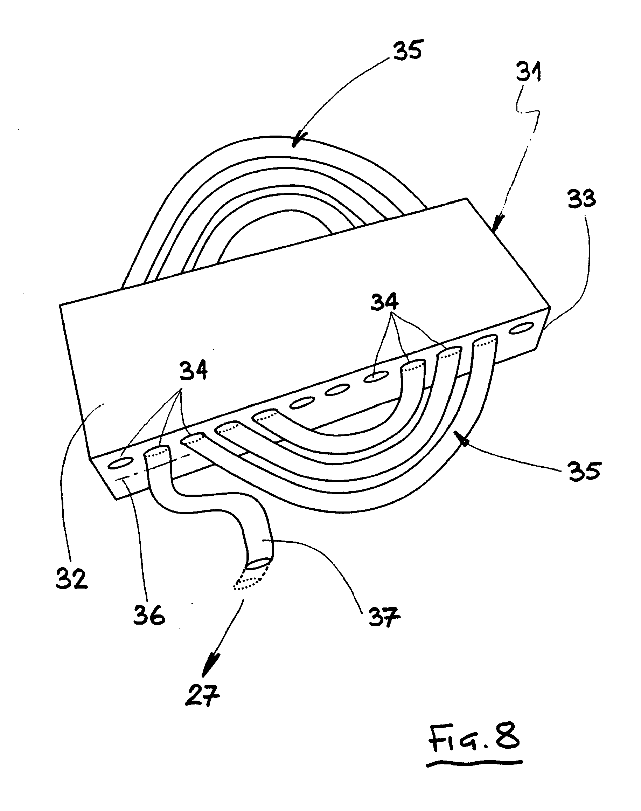

Dans une forme préférée de réalisation, le diffuseur 31 représenté à la Figure 8 est constitué d'une tôle support 32 pliée en U dont chacune des deux ailes 33 est percée d'orifices 34 dont le diamètre est supérieur au diamètre d'un tuyau poreux 35 qui va assurer l'injection de CO₂ (par exemple 18 mm pour le diamètre des orifices et 16 mm pour le diamètre du tuyau).

A cette fin, la tôle support 32 pliée en U est placée sensiblement au centre du fond du deuxième bac de décantation 4 et le tuyau poreux 35 est enroulé en trois ou quatre boucles dans ladite tôle, ainsi qu'il est représenté à la Figure 8, en utilisant les orifices 34.

Le tuyau poreux fait environ trois à quatre mètres de longueur. Il peut s'agir d'un simple tuyau d'arrosage qui laisse librement fuir le gaz CO₂ du tuyau vers le liquide à traiter. Le tuyau poreux 35 est raccordé en 36 au tuyau non poreux 37 qui l'alimente en gaz CO₂ à partir de la bouteille 27. Une vanne est avantageusement disposée au niveau du raccord 36 entre les deux tuyaux 35 et 37.

Le traitement des eaux souillées par injection de gaz CO₂ dans le deuxième bac de décantation 4 est de préférence réalisé de manière semi-automatique, par exemple en réglant le détendeur à un débit d'environ cinquante litres par minute pour des cycles de chacun environ trois minutes. Après chaque cycle d'injection de gaz, et après également qu'il a été vérifié à l'aide d'un papier pH ou d'un pHmètre que la valeur du pH des eaux traitées est bien située dans la plage 6,5-8,5, la bouteille de gaz CO₂ est fermée par sécurité.

Compte tenu des différents éléments qui ont été détaillés ci-dessus et qui composent l'installation selon l'invention, l'armoire technique 3 comprendra aussi avantageusement :
- un surpresseur équipé d'une lance de nettoyage dotée d'un tuyau de lavage,
- un flotteur permettant de couper l'alimentation électrique de la pompe dans le cas où le niveau de l'eau dans le bac d'eau propre 5 serait trop bas,
- une crépine de relevage des eaux souillées, disposée en partie arrière du premier bac de rétention et de décantation 15,
- un flotteur permettant de couper l'alimentation électrique de la pompe dans le cas où le niveau de l'eau dans le premier bac de rétention et de décantation 15 serait trop bas,
- un tuyau de refoulement,
- une minuterie pour limiter dans le temps l'utilisation des pompes afin d'éviter toute détérioration de celles-ci,
- un dispositif de protection de l'ensemble des composants de l'installation en cas de températures extérieures négatives.

Comme il va de soi, l'invention ne se limite pas aux seuls modes d'exécution préférentiels décrits ci-dessus.

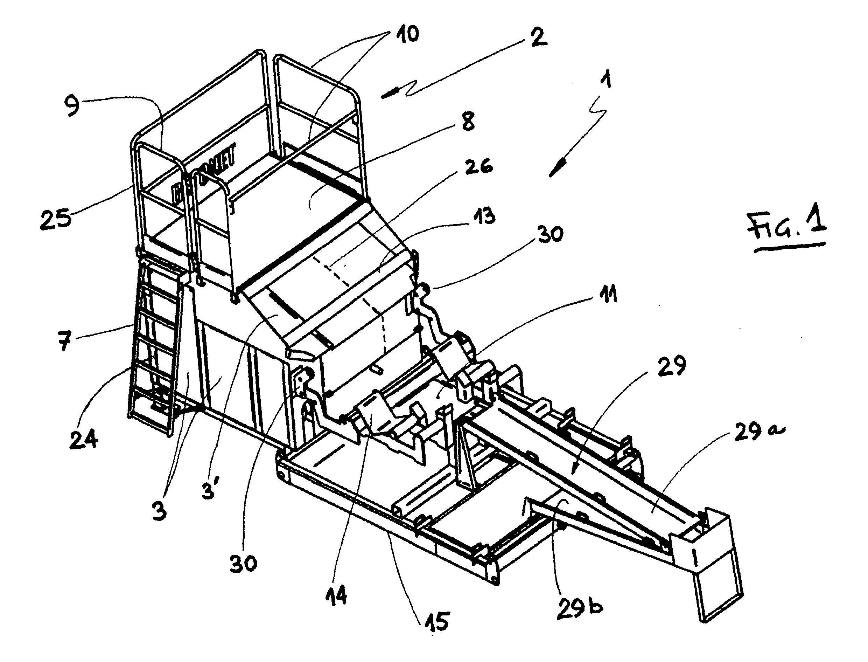

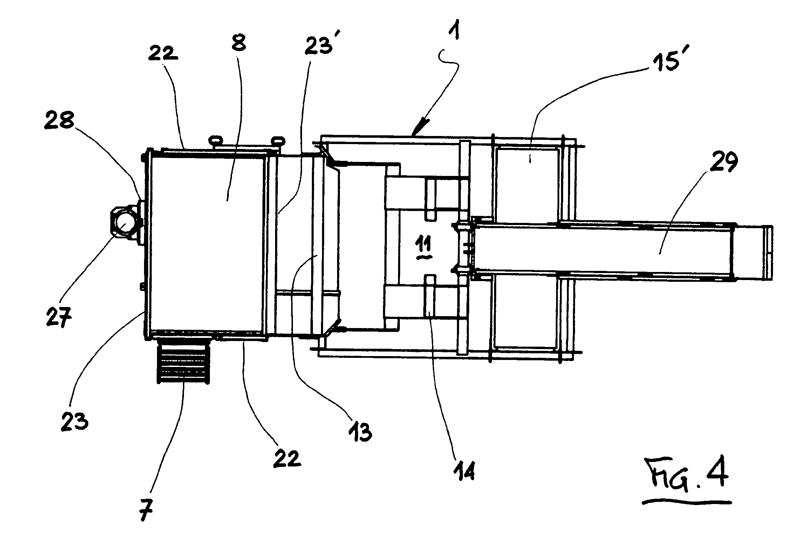

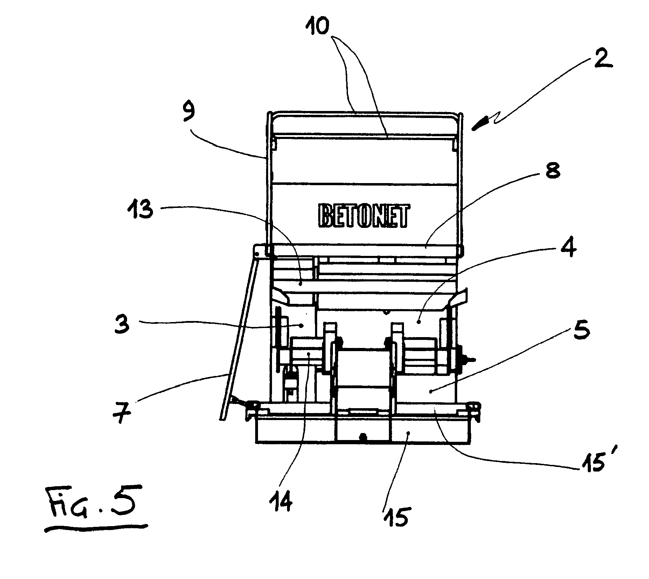

Elle embrasse au contraire toutes les variantes de réalisation telles que divulguées dans les revendications, et notamment l'apport d'une goulotte 29 qui prolonge le premier bac de décantation 15 et qui est apte à recevoir et à supporter tout éventuel tuyau d'écoulement du béton disposé sous le corps de la benne 6 en cours de nettoyage. Cette goulotte étant sensiblement inclinée de haut en bas vers l'avant, elle permettra l'écoulement et la récupération des eaux de lavage de l'intérieur de la benne dans le bac de rétention, tout en maintenant au sec le tuyau lors des phases de stockage de la benne sur l'installation afin de limiter sa dégradation. Au cas où le tuyau prolongeant le corps de la benne 6 serait trop long et s'étendrait au-delà du bord avant du premier bac 15, il est prévu de construire la goulotte 29 en deux segments superposés et d'inclinaisons inverses, ainsi que cela a été représenté aux Figures 1 à 7. Le tuyau prolongeant la benne 6 repose alors sur le segment supérieur 29a de la goulotte 29 tandis que les eaux de lavage s'écoulent depuis le segment supérieur 29a dans le second segment inférieur 29b, par l'ouverture prévue en bout dudit segment supérieur 29a, puis du second segment 29b dans le bac 15.

De même, il est possible de prévoir un dispositif de maintien hors gel de l'installation selon l'invention, afin d'éviter toute détérioration du matériel, si une telle installation est appelée à fonctionner en hiver et/ou dans des pays froids. Un tel dispositif comprendra alors des gaines chauffantes autour des pompes et autour de toutes les canalisations de circulation d'eau.

## Revendications

1. Installation combinée (a) de lavage des bennes et des goulottes de camions toupie et (b) de traitement suivi d'un recyclage des eaux de lavage, ladite installation étant du type comprenant une passerelle (2) équipée d'au moins une échelle d'accès (7) pour le compagnon préposé au lavage, d'au moins un portillon (9) et de rambardes (10) protégeant ledit compagnon contre les risques de chute sur toute la périphérie de la passerelle (2), ladite passerelle surplombant une structure (1) qui est disposée devant elle et qui forme un volume libre (11) agencé pour recevoir et y maintenir au moins une benne (6) à nettoyer, de préférence dans une position où ladite benne est en position inclinée, ladite structure (1) surplombant elle-même un bac de rétention et de décantation (15) des eaux de lavage, ladite installation comprenant également une armoire technique (3), équipée d'un coffret d'alimentation électrique (18), d'un pistolet de lavage sous pression, d'une pompe de relevage (19), pour le pompage des eaux souillées dans le bac de rétention et de décantation (15), reliée à un tuyau d'aspiration, et une unité (4, 5) de traitement des eaux de lavage disposée entre la pompe de relevage et le pistolet de lavage, **caractérisée en ce que** ladite installation comprend en outre un deuxième bac de décantation (4) disposé sous la passerelle (2) et un bac (5) d'eau propre retraitée disposé sous le deuxième bac de décantation (4), l'armoire technique (3) étant pour sa part placée également sous la passerelle (2), à côté du deuxième bac de décantation (4) et du bac d'eau propre (5).

2. Installation selon la revendication 1, **caractérisée en ce que** le deuxième bac de décantation (4), le bac d'eau propre (5) et l'armoire technique (3) débordent en outre la passerelle (2) vers l'avant et s'encastrent pour partie sous la structure (1) agencée pour recevoir et maintenir la benne (6) à nettoyer.

3. Installation selon l'une quelconque des revendications 1 et 2, **caractérisée en ce que** la hauteur de l'armoire technique (3) est sensiblement égale à la hauteur du bac d'eau propre (5) augmentée de la hauteur du deuxième bac de décantation (4).

4. Installation selon l'une quelconque des revendications 1 à 3, **caractérisée en ce que** son unité de traitement (4, 5) permet un traitement du pH avant chaque transvasement d'eau du deuxième bac de décantation (4) dans le bac d'eau propre (5) afin de ramener la valeur du pH de l'eau dans la plage admissible allant de 6,5 à 8,5.

5. Installation selon la revendication 4, **caractérisée en ce que** son unité de traitement comprend des moyens d'injection de gaz CO₂ dans les eaux de lavage contenues dans le deuxième bac de décantation (4) pour traiter le PH.

6. Installation selon la revendication 5, **caractérisée en ce qu'**elle comprend une bouteille (27) de gaz CO₂ et un détendeur fixé sur ladite bouteille et relié par un tuyau souple à un diffuseur de CO₂ disposé dans le fond du deuxième bac de décantation (4), de préférence au centre de ce bac.

7. Installation selon la revendication 6, **caractérisée en ce qu'**elle comprend un porte-bouteille (28) apte à recevoir et à fixer la bouteille (27) de gaz CO₂ à l'arrière du deuxième bac de décantation (4) et du bac d'eau propre (5).

8. Installation selon l'une quelconque des revendications 6 et 7, **caractérisée en ce que** le traitement par injection de gaz CO₂ est réalisé de manière semi-automatique, par exemple en réglant le détendeur à un débit d'environ 50 litres par minute pour des cycles de chacun environ 3 minutes.

9. Installation selon l'une quelconque des revendications 1 à 8, **caractérisée en ce que** le premier bac de décantation (15) est doté d'un platelage amovible (15') permettant au compagnon d'accéder à toutes les parties à laver de la benne (6) tout en sécurisant la zone de lavage.

10. Installation selon l'une quelconque des revendications 1 à 9, **caractérisée en ce que** le premier bac de décantation (15) est prolongé vers l'avant d'une goulotte (29) apte à recevoir et à supporter un éventuel tuyau d'écoulement du béton disposé sous le corps de la benne (6) en cours de nettoyage, cette goulotte (29) étant sensiblement inclinée pour permettre l'écoulement et la récupération des eaux de lavage de l'intérieur de la benne (6) dans le bac de rétention (15), tout en maintenant au sec le tuyau lors des phases de stockage de la benne sur l'installation afin de limiter sa dégradation.

11. Installation selon l'une quelconque des revendications 1 à 10, **caractérisée en ce que** le deuxième bac de décantation (4) est équipé : d'une tôle de séparation (26) disposée verticalement, permettant de séparer les huiles éventuelles des eaux à traiter, d'un dispositif du type vanne manuelle, electro-vanne par exemple, pour le transvasement des eaux dudit deuxième bac de décantation (4) dans le bac d'eau propre (5), d'un dispositif du type vanne manuelle, electro-vanne, bouchon par exemple, pour la vidange du deuxième bac de décantation (4), et éventuellement d'une trappe de visite, pour le nettoyage dudit deuxième bac de décantation (4), laquelle trappe de visite est située sur l'une des faces libres accessibles de ce dernier.

12. Installation selon l'une quelconque des revendications 1 à 11, **caractérisée en ce que** le bac d'eau propre (5) est une enceinte protégée de toute projection, ledit bac (5) comprenant en outre : une prise d'eau, un filtre disposé en amont d'une pompe équipée d'un tuyau conduisant au pistolet de lavage sous pression, un dispositif du type vanne manuelle, electro-vanne, bouchon par exemple, pour la vidange du bac d'eau propre (5) et, éventuellement, un niveau d'eau et une trappe de visite, pour le nettoyage dudit bac d'eau propre, située sur l'une des faces libres accessibles de ce dernier.

13. Installation selon l'une quelconque des revendications 1 à 12, **caractérisée en ce que** l'armoire technique (3) comprend :
la pompe de relevage (19) pompant les eaux souillées dans le premier bac de décantation (15), un tuyau d'aspiration de telles eaux souillées, éventuellement une crépine, éventuellement un flotteur permettant de couper l'alimentation électrique de la pompe dans le cas où le niveau de l'eau dans le premier bac de décantation (15) est trop bas, un tuyau de refoulement et éventuellement une minuterie pour limiter dans le temps l'utilisation des pompes afin d'éviter toute détérioration de celles-ci.

14. Installation selon l'une quelconque des revendications 1 à 13, **caractérisée en ce que** l'armoire technique (3) comprend également un surpresseur équipé d'une lance de nettoyage dotée d'un tuyau de lavage, d'un pistolet de lavage et éventuellement d'un flotteur permettant de couper l'alimentation électrique de la pompe dans le cas où le niveau de l'eau dans le bac d'eau propre (5) est trop bas.

15. Installation selon l'une quelconque des revendications 1 à 14, **caractérisée en ce que** l'armoire technique (3) comprend également un dispositif de protection de l'ensemble des composants de l'installation en cas de températures extérieures négatives.

16. Installation selon l'une quelconque des revendications 6 à 14, **caractérisée en ce que** le diffuseur de CO₂ est constitué d'une tôle support 32 pliée en U dont chacune des deux ailes 33 est percée d'orifices 34 qui reçoivent un tuyau poreux 35 et permettent son enroulement en boucles dans la tôle support 32, le tuyau poreux 35 étant raccordé en 36 à un tuyau souple non poreux 37 qui, relié à la bouteille 27 de gaz CO₂, l'alimente en gaz CO₂.

## Claims

1. Combined system for (a) washing skips and mixer lorry chutes and (b) treating the washing water followed by recycling, the said system being of the type which comprises a platform (2) which is fitted with at least one access ladder (7) for the worker in charge of washing and with at least one gate (9) and railings (10) to protect the said worker from the risk of falling anywhere round the platform (2), the said platform being positioned above a structure (1) which is arranged in front of it and which forms a volume of free space (11) arranged to receive and hold in place in it at least one skip (6) to be cleaned, preferably in a position where the said slip is in an inclined position, the said structure (1) in turn being positioned over a holding and settling tank (15) for the washing water, the said system also comprising an equipment cabinet (3) which is fitted with an electrical supply box (18), a gun for pressure washing, a lift pump (19) for pumping the soiled water into the holding and settling tank (15), which pump is connected to a suction pipe, and a unit (4, 5) for treating the washing water which is arranged between the lift pump and the washing gun, **characterised in that** the said system also comprises a second settling tank (4), which is arranged underneath the platform (2), and a tank (5) for clean water which is withdrawn, which tank (5) for clean water is arranged underneath the second settling tank (4), the equipment cabinet (3) in turn also being positioned underneath the platform (2), beside the second settling tank (4) and the tank (5) for clean water.

2. System according to claim 1, **characterised in that** the second settling tank (4), the tank (5) for clean water and the equipment cabinet (3) also extend beyond the platform (2) and partly fit under the structure (1) which is arranged to receive and hold in place the skip (6) to be cleaned.

3. System according to either of claims 1 and 2, **characterised in that** the height of the equipment cabinet (3) is substantially equal to the height of the tank (5) for clean water plus the height of the second settling tank (4).

4. System according to any one of claims 1 to 3, **characterised in that** its treatment unit (4, 5) enables the pH to be treated before each transfer of water from the second settling tank (4) to the tank (5) for clean water, to restore the pH of the water to the permissible range which extends from 6.5 to 8.5.

5. System according to claim 4, **characterised in that** its treatment unit comprises means for injecting CO₂ gas into the washing water contained in the second settling tank (4), to treat the pH.

6. System according to claim 5, **characterised in that** it comprises a cylinder (27) of CO₂ gas, and a pressure reducer which is fixed to the said cylinder and connected by a pipe to a CO₂ diffuser arranged in the bottom of the second settling tank (4) and preferably in the centre of the tank.

7. System according to claim 6, **characterised in that** it comprises a cylinder holder (28) suitable for receiving the cylinder (27) of CO₂ gas and fixing it to the rear of the second settling tank (4) and the tank (5) for clean water.

8. System according to either of claims 6 and 7, **characterised in that** the treatment by the injection of CO₂ gas is performed semi-automatically, by for example setting the pressure reducer to a flow rate of approximately 50 litres a minute for cycles each of approximately 3 minutes.

9. System according to any one of claims 1 to 8, **characterised in that** the first settling tank (15) is equipped with a detachable walkway plate (15') which enables the worker to gain access to all the parts of the skip (6) which are to be washed, making the washing zone safe.

10. System according to any one of claims 1 to 9. **characterised in that** the first settling tank (15) has at the front an extension in the form of a chute (29) suitable for receiving and supporting a possible outlet tube for the concrete which is arranged below the body of the skip (6) currently being cleaned, this chute (29) being at a substantial inclination to enable the washing water to flow from inside the skip (6) into the holding tank (15) and to be recovered while keeping the tube dry during the phases when the skip is being stored on the system, to limit any damage to the tube.

11. System according to any one of claims 1 to 10, **characterised in that** the second settling tank (4) is equipped with: a vertically arranged dividing plate (26) enabling any oil there may be to be separated from the water to be treated, a device, of the manual valve or electric valve type for example, for transferring the water from the said second settling tank (4) to the tank (5) for clean water, a device, of the manual valve, electric valve or plug type for example, for emptying the second settling tank (4), and possibly an inspection hatch for cleaning the said second settling tank (4), which inspection hatch is situated in one of the accessible free faces of the latter.

12. System according to any one of claims 1 to 11, **characterised in that** the tank (5) for clean water is an enclosure which is protected against any splashing, the said tank (5) also comprising: a water outlet, a filter which is arranged upstream of a pump fitted with a pipe running to the gun for pressure washing, a device, of the manual valve, electric valve or plug type for example, for emptying the tank (5) for clean water, and, possibly, a water-level gauge and an inspection hatch, for cleaning the said tank for clean water, which is situated in one of the accessible free faces of the latter.

13. System according to any one of claims 1 to 12, **characterised in that** the equipment cabinet (3) comprises: the lift pump (19) which pumps the soiled water into the first settling tank (15), a pipe for drawing in such soiled water, possibly a strainer, possibly a float which enables the electrical supply to the pump to be cut off if the level of the water in the first settling tank (15) is too low, a delivery pipe, and possibly a timer to limit the time for which the pumps are used in order to prevent any damage thereto.

14. System according to any one of claims 1 to 13, **characterised in that** the equipment cabinet (3) also comprises a pressure booster which is equipped with a cleaning lance fitted with a washing pipe, with a washing gun and possibly with a float which enables the electrical supply to the pump to be cut off if the level of the water in the tank (5) for clean water is too low.

15. System according to any one of claims 1 to 14, **characterised in that** the equipment cabinet (3) also comprises an arrangement for protecting all the components of the system in the event of negative outside temperatures.

16. System according to any one of claims 6 to 14, **characterised in that** the CO₂ diffuser is formed by a support plate (32) bent into a U of which each of the two sides (33) is pierced with orifices (34) which receive a pored pipe (35) and enable it to be coiled into loops in the support plate (32), the pored pipe (35) being connected at (36) to a flexible non-pored pipe (37) which, being connected to the cylinder (27) of CO₂ gas, supplies the pored pipe (35) with CO₂ gas.

## Patentansprüche

1. Kombinierte Anlage (a) zum Waschen von Kübeln und von Rutschen von Betonmischfahrzeugen und (b) für eine nachfolgende Behandlung mit Wiederaufbereitung der Waschwasser, wobei die Anlage vom Typ ist umfassend eine Brücke (2), die mit wenigstens einer Zugangsleiter (7) für die mit dem Waschen beauftragte Person ausgestattet ist, mit wenigstens einer Sperre (9) und mit Geländern (10), die die Person auf dem gesamten Umfang der Brücke (2) vor den Risiken eines Sturzes schützen, wobei die Brücke eine Struktur (1) überragt, die vor ihr angeordnet ist und die ein freies Volumen (11) bildet, das dazu ausgelegt ist, wenigstens einen zu reinigenden Kübel (6) aufzunehmen und dort zu halten, vorzugsweise in einer Position, in der der Kübel in geneigter Position ist, wobei die Struktur (1) selbst wiederum ein Rückhalte- und Absetzbecken (15) für die Waschwasser überragt, wobei die Anlage ferner einen Technikschrank (3) umfasst, der ausgestattet ist mit einem elektrischen Versorgungskasten (18), einer Druckwaschpistole und eine Hebepumpe (19) zum Pumpen der Schmutz-Abwässer in das Rückhalte- und Absetzbecken (15), die mit einem Ansaugrohr verbunden ist, sowie eine Einheit (4, 5) zur Behandlung der Waschwasser, die zwischen der Hebepumpe und der Waschpistole angeordnet ist, **dadurch gekennzeichnet, dass** die Anlage ferner ein zweites Absetzbecken (4) umfasst, das unter der Brücke (2) angeordnet ist, sowie ein Becken (5) für wiederaufbereitetes sauberes Wasser, das unter dem zweiten Absetzbecken (4) angeordnet ist, wobei der Technikschrank (3) seinerseits ebenfalls unter der Brücke (2) neben dem zweiten Absetzbecken (4) und dem Becken für sauberes Wasser (5) angeordnet ist.

2. Anlage nach Anspruch 1, **dadurch gekennzeichnet, dass** das zweite Absetzbecken (4), das Becken für sauberes Wasser (5) und der Technikschrank (3) ferner über die Brücke (2) hinaus nach vorne vorstehen und teilweise unter die Struktur (1) eingefügt sind, die dazu ausgelegt ist, den zu reinigenden Kübel (6) aufzunehmen und zu halten.

3. Anlage nach einem der Ansprüche 1 und 2, **dadurch gekennzeichnet, dass** die Höhe des Technikschranks (3) im Wesentlichen gleich der Höhe des Beckens für sauberes Wasser (5) vergrößert um die Höhe des zweiten Absetzbeckens (4) ist.

4. Anlage nach einem der Ansprüche 1 bis 3, **dadurch gekennzeichnet, dass** ihre Behandlungseinheit (4, 5) eine pH-Behandlung vor jedem Umfüllen von Wasser vom zweiten Absetzbecken (4) in das Becken für sauberes Wasser (5) erlaubt, um den pH-Wert des Wassers in den zugelassenen Bereich zu bringen, der von 6,5 bis 8,5 reicht.

5. Anlage nach Anspruch 4, **dadurch gekennzeichnet, dass** ihre Behandlungseinheit Mittel zum Injizieren von CO₂-Gas in die Waschwasser umfasst, die im zweiten Absetzbecken (4) enthalten sind, um den pH zu behandeln.

6. Anlage nach Anspruch 5, **dadurch gekennzeichnet, dass** sie eine CO₂-Gasflasche (27) und einen Druckminderer umfasst, der an der Flasche befestigt und mittels eines flexiblen Schlauchs mit einem CO₂-Verteiler verbunden ist, der am Boden des zweiten Absetzbeckens (4) angeordnet ist, vorzugsweise in der Mitte dieses Beckens.

7. Anlage nach Anspruch 6, **dadurch gekennzeichnet, dass** sie einen Flaschenhalter (28) umfasst, der dazu ausgelegt ist, die CO₂-Gasflasche (27) hinter dem zweiten Absetzbecken (4) und dem Becken für sauberes Wasser (5) aufzunehmen und zu befestigen.

8. Anlage nach einem der Ansprüche 6 und 7, **dadurch gekennzeichnet, dass** die Behandlung mittels Injektion von CO₂-Gas in halbautomatischer Weise realisiert wird, beispielsweise durch Einregeln des Druckminderers auf eine Rate von ungefähr 50 Liter pro Minute für Zyklen von jeweils ungefähr 3 Minuten.

9. Anlage nach einem der Ansprüche 1 bis 8, **dadurch gekennzeichnet, dass** das erste Absetzbecken (15) mit einem herausnehmbaren Belag (15') ausgestattet ist, der es der Person erlaubt, Zugang zu allen zu waschenden Teilen des Kübels (6) bei gleichzeitiger Sicherung der Waschzone zu haben.

10. Anlage nach einem der Ansprüche 1 bis 9, **dadurch gekennzeichnet, dass** das erste Absetzbecken (15) nach vorne durch eine Rutsche (29) verlängert ist, die dazu ausgelegt ist, im Verlauf der Reinigung einen eventuellen Betonabflussschlauch aufzunehmen und zu halten, der unter dem Gehäuse des Kübels (6) angeordnet ist, wobei diese Rutsche (29) wesentlich geneigt ist, um das Abfließen und das Auffangen der Waschwasser aus dem Inneren des Kübels (6) in dem Absetzbecken (15) zu erlauben und gleichzeitig den Schlauch während der Phasen der Lagerung des Kübels auf der Anlage trocken zu halten, um seine Beschädigung zu begrenzen.

11. Anlage nach einem der Ansprüche 1 bis 10, **dadurch gekennzeichnet, dass** das zweite Absetzbecken (4) ausgestattet ist: Mit einem vertikal angeordneten Trennblech (26), das die Trennung eventueller Öle von den zu behandelnden Wassern erlaubt, mit einer Vorrichtung vom Typ beispielsweise manuelles Ventil, Elektroventil, für das Umfüllen der Wasser vom zweiten Absetzbecken (4) in das Becken für sauberes Wasser (5), mit einer Vorrichtung vom Typ beispielsweise manuelles Ventil, Elektroventil, Stopfen, zum Entleeren des zweiten Absetzbeckens (4), sowie eventuell mit einer Revisionsklappe für das Reinigen des zweiten Absetzbeckens (4), welche Revisionsklappe an einer der freien zugänglichen Seiten dieses Letztgenannten angeordnet ist.

12. Anlage nach einem der Ansprüche 1 bis 11, **dadurch gekennzeichnet, dass** das Becken für sauberes Wasser (5) ein Behälter ist, der vor jeglichem Spritzer geschützt ist, wobei das Becken (5) ferner umfasst: Einen Wasseranschluss, einen Filter, der stromaufwärts einer Pumpe angeordnet ist, die mit einem Schlauch ausgestattet ist, der zu der Druckwaschpistole führt, eine Vorrichtung vom Typ beispielsweise manuelles Ventil, Elektroventil, Stopfen zum Entleeren des Beckens für sauberes Wasser (5) sowie, gegebenenfalls, eine Wasserstandsanzeige und eine Revisionsklappe für die Reinigung des Beckens für sauberes Wasser, die an einer freien zugänglichen Seiten dieses Letztgenannten angeordnet ist.

13. Anlage nach einem der Ansprüche 1 bis 12, **dadurch gekennzeichnet, dass** der Technikschrank (3) umfasst: Die Hebepumpe (19), die die Schmutzwasser in das erste Absetzbecken (15) pumpt, einen Ansaugschlauch für solche Schmutzwasser, gegebenenfalls ein Sieb, gegebenenfalls einen Schwimmer, der es erlaubt, die elektrische Versorgung der Pumpe in dem Fall zu unterbrechen, in dem der Wasserpegel in dem ersten Absetzbecken (15) zu niedrig ist, einen Druckschlauch sowie gegebenenfalls eine Schaltuhr, um die Benutzung der Pumpen zeitlich zu begrenzen, um jegliche Verschlechterung derselben zu vermeiden.

14. Anlage nach einem der Ansprüche 1 bis 13, **dadurch gekennzeichnet, dass** der Technikschrank (3) ferner einen Vorverdichter umfasst, der mit einer Reinigungsdüse ausgestattet ist, welche versehen ist mit einem Waschschlauch, mit einer Waschpistole und gegebenenfalls mit einem Schwimmer, der es erlaubt, die elektrische Versorgung der Pumpe in dem Fall zu unterbrechen, in dem der Wasserpegel im Behälter für sauberes Wasser (5) zu niedrig ist.

15. Anlage nach einem der Ansprüche 1 bis 14, **dadurch gekennzeichnet, dass** der Technikschrank (3) ferner eine Vorrichtung zum Schutz der Gesamtheit der Komponenten der Anlage im Fall von negativen Außentemperaturen umfasst.

16. Anlage nach einem der Ansprüche 6 bis 14, **dadurch gekennzeichnet, dass** der CO₂-Verteiler durch ein Tragblech (32) gebildet ist, das zu einem U gebogen ist, bei dem in jeden der zwei Flügel (33) Öffnungen (34) gebohrt sind, die einen porösen Schlauch (35) aufnehmen und es erlauben, ihn in Schlaufen auf das Tragblech (32) zu wickeln, wobei der poröse Schlauch (35) bei (36) an einen flexiblen nicht-porösen Schlauch (37) angeschlossen ist, der mit der CO₂-Gasflasche (27) verbunden ist und sie mit CO₂-Gas versorgt.
